# EUROPEAN PATENT SPECIFICATION

(11) **EP 1 235 434 B1**
(45) Date of publication and mention of the grant of the patent: **12.10.2005**
(21) Application number: 01811123.7
(22) Date of filing: 22.11.2001
(51) Int. Cl.: H04N 7/22, H04N 7/10

(54) **Two-way network for distributing catv signals to premises by means of optical fibers**
Zweiwegnetzwerk zur Verteilung von Kabel-TV-Signalen an Endpunkte mittels optischer Fasern
Reseau à deux voix pour la distribution de signaux à des locaux utilisant des fibres optiques

(30) Priority: 07.12.2000 CH 23812000
(43) Date of publication of application: 28.08.2002
(73) Proprietor: EMC Electronic Media Communication S.A., 6592 S. Antonino (CH)
(72) Inventor: Marcionetti, Raffaello, 6714 Semione (CH); Franscini, Giovanni, 6710 Biasca (CH); Tonini, Andrea EMC Electronic Media Commun. S.A., 6592 S. Antonino (CH)
(74) Representative: Fiammenghi-Domenighetti, Delfina

(56) References cited:
- EP-A- 0 239 908
- WO-A-97/01236
- WO-A-99/31885
- US-A- 5 262 883
- US-A- 6 041 056

## Description

The present invention relates in a general way to telecommunications networks for cable distribution of television signals. More particularly, it relates to a two-way optical fibre network for distributing television signals to a subscriber's premises without using coaxial cable, in such a way that the transmission of CATV signals and the broadband return path are facilitated and the distortions are minimized in such a way as to improve the quality of the television image and the bandwidth accessible by each subscriber.

The present invention is particularly suited to CATV distribution systems in which AM (amplitude modulated) signals and those of the DOCSIS type are generated or transmitted.

At present, the configuration of a television signal network consists of an optical fibre portion and a coaxial cable portion leading to the customer. The liberalization in the field of telecommunications in recent years has enabled the owners of these networks to offer new services in addition to the conventional provision of radio and television programmes. This has been made possible by the transmission of data by means of suitable modems with radio-frequency modulated signals. In practice, the separation of the working band of a coaxial cable into two parts creates an outgoing path, on which the radio and television channels are present, together with the data transmission channel, and a return path, with narrower bandwidth, for data transmission.

This has enabled the existing coaxial cables in the final portion to be retained in the short term. At the present time, practically all television signal networks use a system of data transmission via coaxial cables for the final portion, while there is increasingly widespread use of optical fibre cables in the first portion, in a system such as that proposed in US 5,262,883, "CATV distribution networks using light wave transmission lines".

The use of what is effectively a hybrid fibre-coaxial cable data transmission system has revealed criticalities and problems of a technical nature in the distribution system. The criticalities are encountered, primarily, in the accumulated noise in the return path, in the disturbances entering via insufficiently screened existing coaxial cable, and in the limitation of the useful bandwidth. These problems increase with an increase in the number of users connected via modem.

The invention which is now disclosed proposes the replacement of existing coaxial cables with a certain number of optical fibres which have the advantage of permitting a high data transmission capacity, even in the present conditions, without any particular problems and in a rather simple way. The invention also permits the transmission of analog and digital television signals and ensures compatibility with the radio-frequency modem-based data transmission system. To distribute an optical signal to the user, it is necessary to have an amplification system which compensates for the branch-off loss. The existing solutions all propose the use of expensive low-distortion optical amplifiers, as for example in the article "SUPER PON-A Fiber to the Home Cable Network for CATV and POTS/ISDN/VOD as Economical as a Coaxial Cable Network", in Journal of Lightwave Technology, Vol. 15, No. 2, February 1997, or in US 5,914,799 which has the title "Optical Network". Other solutions comprise the use of the fibre up to the subscriber's premises, but do not provide a return path. An example of these solutions, which are typically of the tree type, is found in US 5,331,449 which has the title "Optical fiber tree and branch network for AM signal distribution". Patent US-A-6 041 056 (Sistanizadeh Kamran et al) describes a network that presents some features aimed at solving the same kind of problems solved by this EMC application, but, as it can be deduced from the following description, this application discloses the use of several different interconnected systems which allows to reach the wished advantages. The solution proposed by the present invention enables the television signal to be carried by optical means to the subscriber's premises, and makes it possible to have a return path consisting entirely of optical fibre for carrying the data from the subscriber's premises, at low cost, and in such a way as to maintain flexibility with the existing type of network.

More particularly, the invention takes the form of equipment for external use, having a first optical fibre input for the entry of broadband optical AM television signals from the last optical node, a number N of optical fibre outputs for the transmission of the optical signals whose number depends on the number of subscribers to be connected, a number M of optical fibre inputs which connect an optical interface present at the premises of each individual subscriber to the equipment in question, an optical fibre output to which is sent the optical signal carrying the data from the premises of the individual subscribers, and a coaxial connector output to maintain the system's compatibility with conventional electrical signals. The said coaxial connector output is used if the first portion of the CATV network is of the coaxial type. In the present description and in the claims, the said equipment for external use is called a "dual broadband optoelectronic repeater". The terms "head end" or "CATV head end module" or "station" will be used to denote the place and devices which transmit the broadband AM television signal optically in the optical fibre network, and in which the reception and demodulation of the sum of the optical signals arriving from the individual subscribers are carried out. Additionally, the term "outgoing path" indicates the components of the network which carry the broadband CATV signal from the station (head end) to the premises of each user, and the term "return path" indicates the components of the network which carry the data-containing signals from the premises of the individual subscribers to the station (head end). The said first optical fibre input is terminated with an optoelectronic receiver which can convert the broadband AM CATV optical signals to electrical signals. The electrical signals produced in this way are amplified. The said amplified electrical signals are then divided by an RF splitter and sent to N laser sources. The said N laser sources are supplied independently via an output optical power control circuit. A CPU connected to the said output optical power control circuit enables the said N laser sources to be switched off and on remotely, thus permitting the simple remote disconnection and connection of each subscriber. The said N laser sources implement a conversion of the received electrical signal to an optical signal and send it, via N optical fibre outputs, directly to each subscriber. The said equipment for external use has another M optical fibre inputs, which carry the return path signal from the individual subscribers, which is converted to an electrical signal by an array of M optoelectronic receivers. The said M optoelectronic receivers are also switched on and off independently and remotely by the said CPU. An RF combiner adds together the M electrical signals produced by the said M optoelectronic receivers and sends the resulting sum to an amplifier. The said amplifier is connected to a switch that can switch the said sum to a separating filter or to a laser transmitter for the return path. The said laser transmitter for the return path converts the said sum to an optical signal and transmits it by optical fibre to the station. The said separating filter is connected to the said output by a coaxial connector. The dual broadband optoelectronic repeater in question makes it possible to use the whole signal band provided by an optical fibre, and therefore has the advantage of permitting the frequency allocation of the carrier signals in the frequency ranges where non-linear phenomena have less effect, thus providing an improvement in the non-linearity of the system in both the outgoing path and the return path. Moreover, because of the large bandwidth of the optical fibre, it enables the flatness of the channel level to be maintained throughout the band, without the need for further equalization systems, thus providing a uniform quality of the television image in all channels. A further advantage of the present invention is that, as well as providing the individual subscriber with access to the whole available bandwidth of the optical fibre for data transfer, it makes it possible to use a network topology of the point-to-point type in which the individual subscriber has a dedicated optical fibre channel, without branches between the socket installed at his premises and the final optical transmitter or receiver in the dual broadband optoelectronic repeater. This topology is suitable for the use of numerous protocols at the transport level and is flexible and robust in terms of security. The point-to-point topology also allows simple remote disconnection of each subscriber according to the requirements of the network controller. Finally, particular mention should be made of the absence of costly passive optical components such as optical isolators, filters and amplifiers; the compatibility with coaxial cable networks; and the intrinsic immunity of the optical fibre to electromagnetic disturbances.

Further advantages, characteristics and variants of the present invention will now be illustrated with reference to embodiments represented by way of example, without restrictive intent, in the attached drawings, in which
- Fig. 1 shows a block diagram of a CATV network with an optical fibre link to the subscriber according to the invention;
- Fig. 2 shows a block diagram of a CATV network with an optical fibre link to the subscriber according to the invention, in a second embodiment;
- Fig. 3 shows a block diagram of a CATV network with an optical fibre link to the subscriber according to the invention, in a third embodiment;
- Fig. 4 shows a block diagram of a portion of the CATV network with an optical fibre link to the subscriber, identified in Fig. 1 as a "dual broadband optoelectronic repeater", which represents an embodiment of the invention in a first form of construction;
- Fig. 5 shows a block diagram of a portion of the CATV network with an optical fibre link to the subscriber, identified in Fig. 1 as a "dual broadband optoelectronic repeater", which represents an embodiment of the invention in a second form of construction;
- Fig. 6 shows a block diagram of a portion of the CATV network with an optical fibre link to the subscriber, identified in Fig. 1 as a "dual broadband optoelectronic repeater", which represents an embodiment of the invention in a third form of construction.

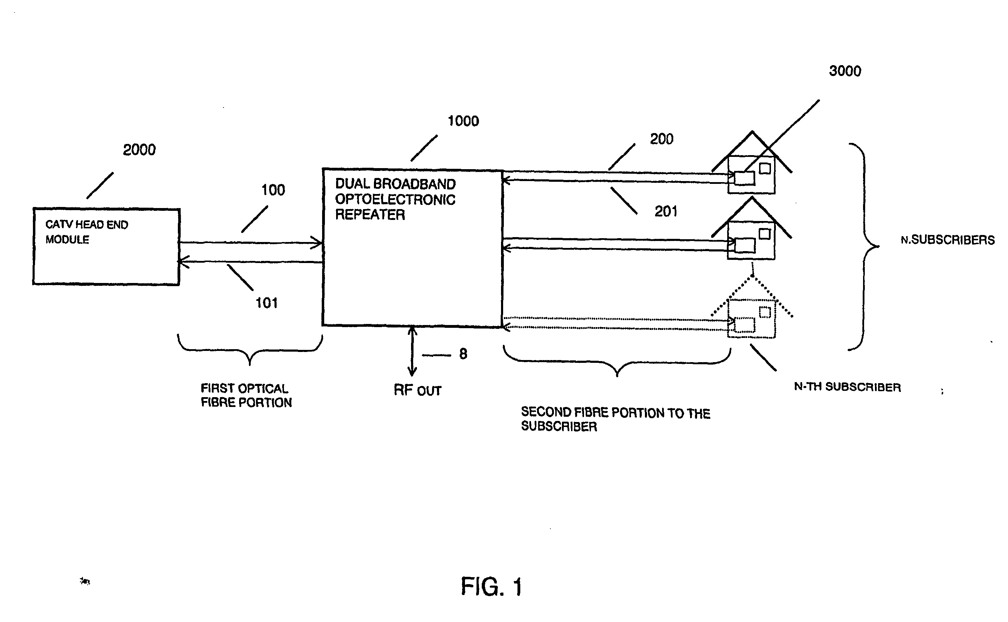

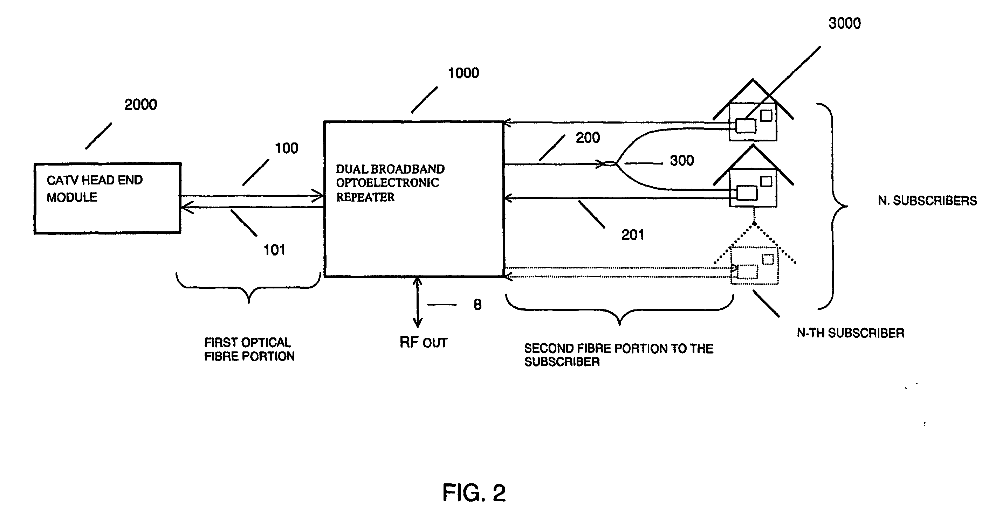

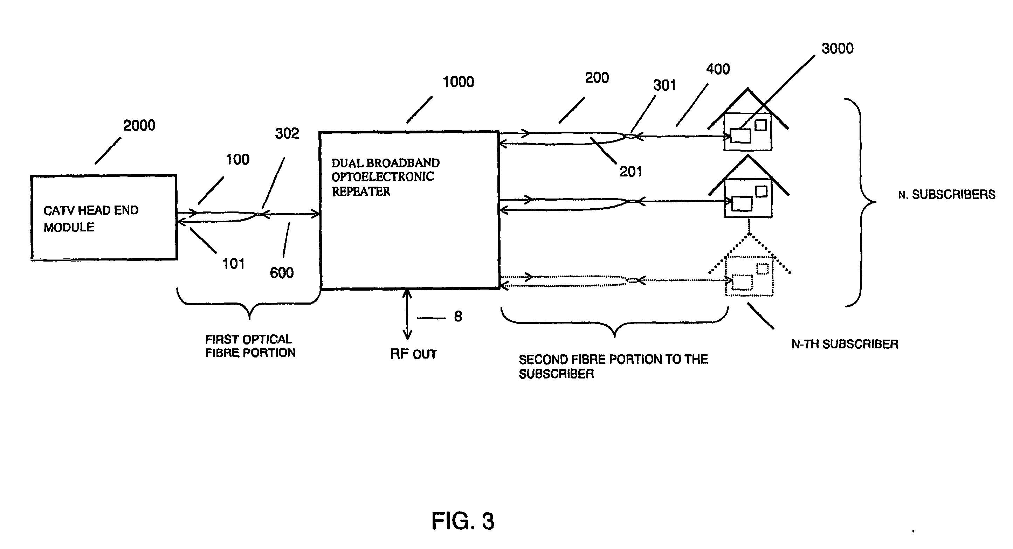

With reference to Fig. 1, an optical fibre CATV network with an optical fibre link to the subscriber is shown. All the amplitude modulated broadband CATV channels are sent via optical fibre from the station or "head end" indicated by the number 2000. In the embodiment of the invention, a transmission test was conducted on the video and radio channels in a band extending from 47 MHz to 860 MHz. The signal formed by these combined channels is applied to an optical transmitter and is sent by this transmitter along the optical fibre 100. The equipment according to the invention 1000 regenerates the optical signals which are present at its input and which have been carried by the fibre 100 from the head end, and sends them by means of an array of optical transmitters along N fibres 200 to the premises of individual subscribers where there are subscriber sockets 3000 where the interfacing with the television sets and data transmission and reception systems takes place. The number N of fibres 200 depends on the number of subscribers to be connected and on the topology of the final network. The number N is equal to the number of subscribers who are to be connected according to the embodiment of Fig. 1, which provides a simple means of disabling the service to each subscriber and a point-to-point topology in the outgoing path. There is also an RF coaxial conductor 8 for connecting the repeater 1000 to a coaxial cable network. Signals are transmitted from the subscriber socket 3000 along the optical fibre return path. These signals arrive at the repeater 1000 which adds them and sends them, again by optical means, along the optical fibre 101 to the head end 2000. Fig. 2 shows a variant of the said point-to-point topology which makes use of 1xK optical couplers 300, where K is a generic number such that the number of fibres 200 is smaller than the number of subscribers. This type of arrangement with couplers is less expensive, since it reduces the number of optical transmitters in the optoelectronic repeater and fibres, but does not allow the controller to remotely disconnect an individual subscriber. A further variant is shown in Fig. 3, in which optical couplers 301 are used, so that the same fibre 400 can be used for the outgoing path, and the same can be done, but is not necessarily done, for the fibre 100, where a coupler 302 can be inserted and the portion of fibre 600 can be used to transmit the signal in both directions. This solution provides a saving in optical fibre, since only one fibre, shared by the outgoing path and the return path, is used, but entails the additional expense of the optical couplers 301 and 302.

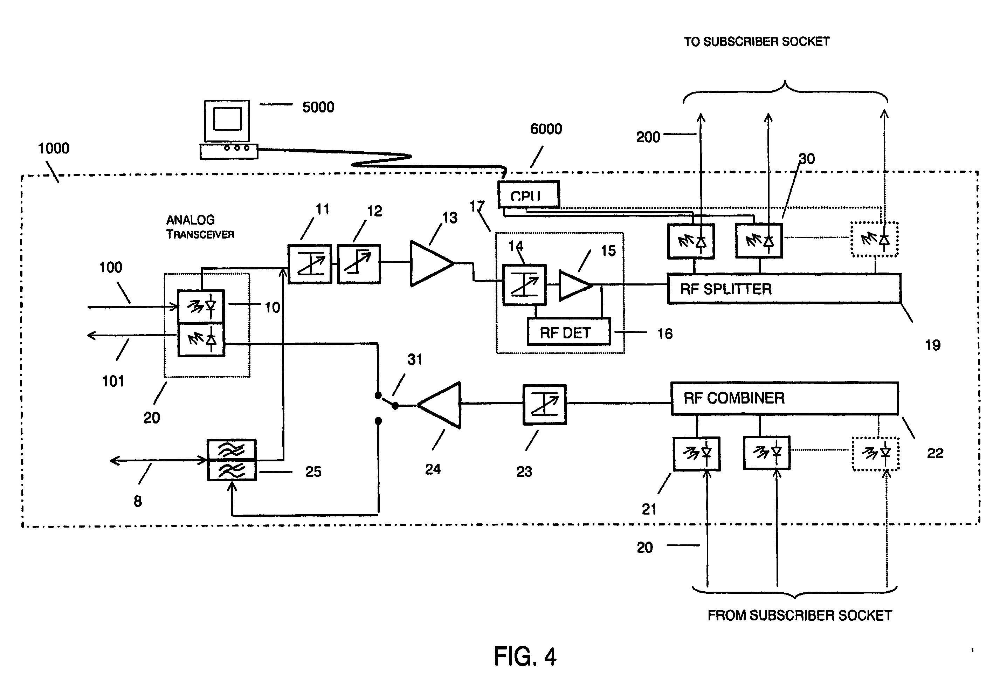

Fig. 4 shows a block diagram of the elements making up the equipment for external use 1000, called a "dual broadband optoelectronic repeater", in a first form of construction, allowing the use of the types of CATV network with optical fibre links to the subscriber shown in Fig. 1, Fig. 2 and Fig. 3.

A set of 42 CENELEC carriers with a band from 47-MHz to 860 MHz modulates, with an OMI of 5%, a CATV optical transmitter made by the EMC company, with an output power of 13 dBm, thus producing an optical signal which is propagated along the optical fibre 100 to the input of the repeater 1000. The said optical signal is converted to an electrical signal by a broadband high-linearity analog receiver 10, which comprises a photodiode and an analog preamplifier. In this first conversion, a CTB of 65 dB, a CSO of 62 dB, and a C/N ratio of 51 are measured. The analog receiver 10 forms part of an analog transceiver 20 which forms the optical/electrical interface between the optoelectronic repeater and the optical network originating from the head end. The said signals converted to electrical signals pass from the receiver 10 to the input of the variable attenuator 11, to a cable corrector 12, to a broadband amplifier 13, and then to a gain control circuit (AGC) 17 consisting of a variable attenuator 14, a second amplifier 15 and an RF detector 16. On leaving the gain control circuit 17, the optical signals converted to electrical signals are divided by an RF splitter 19, by a factor of 8 in the embodiment in question, and are then sent to 8 laser telecommunications transmitters of the VCSEL type 30. Each of the said laser telecommunications transmitters 30 is driven by a current driver subject to feedback control via its internal photodiode which keeps the output optical power constant. The laser drivers are connected to the output of a microprocessor (CPU) 6000 with 8 outputs, which is programmed by means of the computer 5000 to keep all 8 VCSEL telecommunications lasers 30 switched on. The said laser telecommunications transmitters convert the electrical signal back into an optical signal and send it via 8 output fibres 200 to 8 subscriber sockets 3000 in each of which there is a photodiode which reconverts the optical signal to an electrical signal. In this second conversion, a CTB of 58 dB, a CSO of 57 dB, and a C/N ratio of 46 dB are measured.

The equipment 1000 of Fig. 4 comprises an array of 8 broadband photodiodes 21 which convert the optical signal present at the subscriber socket 3000 into an electrical signal, using the optical fibre 201 running from the subscriber socket 3000. A signal modulated at the frequency of 100 MHz is sent from the subscriber socket 3000 to one of the 8 photodiodes 21, while optical power is simultaneously sent to all of the photodiodes from another 7 sockets 3000. The 8 photodiodes 21 convert the optical signals from the 8 sockets 3000 to electrical signals.

The sum of the electrical output of the photodiodes 21 is found by an RF combiner 22 and sent to a variable attenuator 23 and to an amplifier 24. The band of the 8 photodiodes 21 in parallel is 125 MHz, and their C/N ratio is 46 dB.

The output of the amplifier 24 is sent to the switch 31 which enables the output of the amplifier 24 to be switched either to the separating filter 25, which has an RF output to the coaxial connector 8 of the 3.5/12 type, or to the broadband high-linearity optical transmitter 20 provided with an output isolator. This switching operation can be used to select the configuration of the repeater 1000, either for a CATV network with its first portion consisting of coaxial cable, or for a more modern CATV network with its first portion consisting of optical fibre. The said optical transmitter 20 converts the electrical signal from the amplifier 24 to an optical signal, and transmits it along the optical fibre return path 101 which then sends it back to the head end.

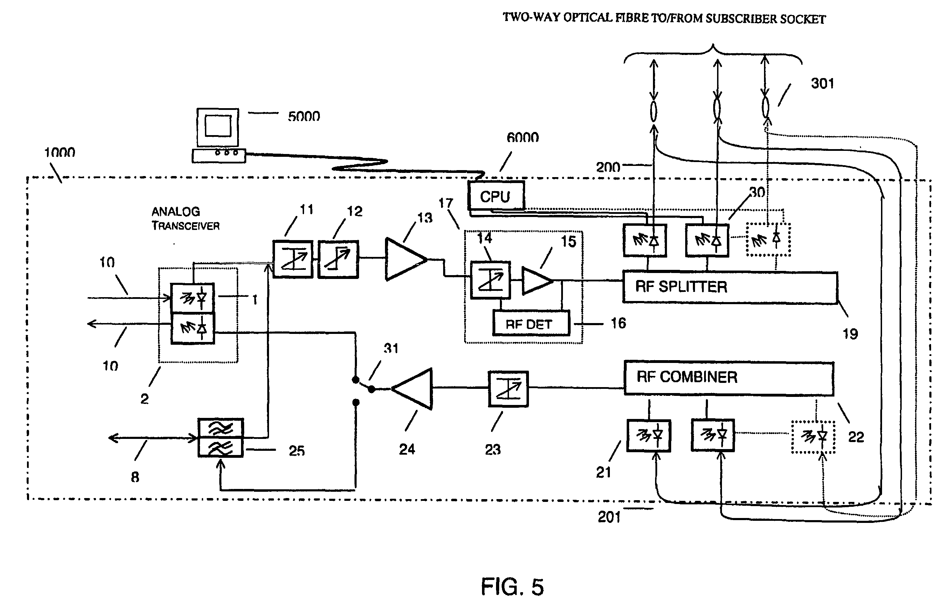

Fig. 5 shows a variant of the embodiment shown in Fig. 4, in which optical couplers 301 are fitted in the return path.

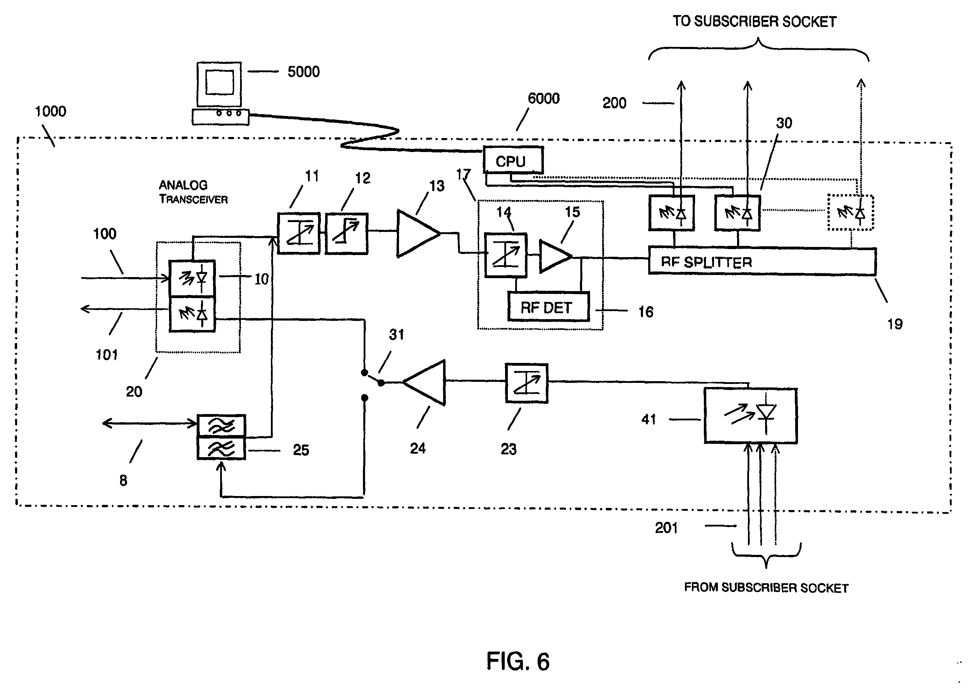

Fig. 6 shows another variant in which 4 fibres terminate on a single broadband photodiode 41. In this case, it was found that a band equivalent to 4 photodiodes in parallel was obtained, with evident savings in components, while the S/N level remained unchanged as long as the photodiode was not saturated.

## Claims

1. Two-way CATV network for distributing broadband multi-channel optical CATV signals from a dual broadband optoelectronic repeater to the subscriber's premises via optical fibre, and for distributing the signals on the return path from the subscriber's premises to the head end via optical fibre, comprising a multilayer electronic printed circuit on which are mounted the receiving and transmitting systems a connection system for facilitating the configuration of the system, **characterized in that** it further comprises:
- a system (20) located in the said dual broadband optoelectronic repeater for converting the said broadband multi-channel optical CATV signals to amplitude modulated electrical signals;
- a system (11, 12, 13, 17) located in the said dual broadband optoelectronic repeater for amplifying the said amplitude modulated electrical signals and branching them to a plurality of lines;
- a system (19, 30) located in the said dual broadband optoelectronic repeater for converting the said amplitude modulated electrical signals, branched to a plurality of lines, to amplitude modulated optical signals, and for transmitting the said amplitude modulated optical signals along a plurality of optical fibre output cables (200) to a subscriber socket located in the residence of each said subscriber;
- a system (21) located in the said dual broadband optoelectronic repeater for converting to electrical signals the optical signals which arrive from the subscriber sockets located in the residences of the said subscribers, and which are transmitted along a plurality of optical fibre input cables;
- a system (22, 23, 24) located in the said dual broadband optoelectronic repeater for adding and amplifying the said electrical signals and producing an amplified electrical sum signal;
- a system (20) located in the said dual broadband optoelectronic repeater for converting the said amplified electrical sum signal to an optical sum signal and for transmitting the said optical sum signal to the head end along optical fibres (101);
- a system (25) located in the said dual broadband optoelectronic repeater for converting the said amplified electrical sum signal to an electrical output with a coaxial cable connector;
- a system (5000, 6000) located in the said dual broadband optoelectronic repeater for remotely switching on and off the optical signal present in the said plurality of optical fibre output cables;
- a system located in the said dual broadband optoelectronic repeater for remotely disconnecting and connecting the optical signal present in the said plurality of optical fibre input cables from and to the said dual broadband optoelectronic repeater;

2. CATV network according to Claim 1, **characterized by** one or more single-mode fibres which connect the said dual broadband optoelectronic repeater to the said subscriber socket.

3. CATV network according to Claim 1, **characterized by** one or more multi-mode fibres which connect the said dual broadband optoelectronic repeater to the said subscriber socket.

4. CATV network according to Claims 1 or 2 or 3, **characterized by** lasers of the VCSEL type for converting the said amplitude modulated electrical signals branched to a plurality of lines to the said amplitude modulated optical signals which are transmitted along the said plurality of optical fibre output cables.

5. CATV network according to Claims 1 or 2 or 3, **characterized by** lasers of the Fabry Perot type for converting the said amplitude modulated electrical signals branched to a plurality of lines to the said amplitude modulated optical signals which are transmitted along the said plurality of optical fibre output cables.

6. CATV network according to Claims 1 or 2 or 3, **characterized by** lasers of the DFB (Distributed Feedback) type for converting the said amplitude modulated electrical signals branched to a plurality of lines to the said amplitude modulated optical signals which are transmitted along the said plurality of optical fibre output cables.

7. CATV network according to Claim 1, **characterized by** a programmable microprocessor control circuit for switching on and off the said amplitude modulated optical signals which are transmitted along the said plurality of optical fibre output cables.

8. CATV network according to Claim 1, **characterized by** a programmable microprocessor control circuit for remotely disconnecting and connecting the optical signal present in the said plurality of optical fibre input lines.

9. CATV network according to Claim 1, **characterized in that** the said sum signal is produced by aligning a plurality of fibres on to a single photodiode.

## Patentansprüche

1. Zweiwege-CATV-Netz zum Verteilen optischer Breitband-Mehrkanal-CATV-Signale von einem optoelektronischen Dualbreitband-Verstärker zu den Teilnehmerstandorten über Lichtleitfasern und zum Verteilen der Signale auf dem Rückkehrweg von den Teilnehmerstandorten zum Kopfende über Lichtleitfasern, mit einer mehrlagigen elektronischen gedruckten Schaltung, auf der die Empfangs- und Sendesysteme montiert sind, und einem Verbindungssystem, das die Konfiguration des Systems erleichtert,
**dadurch gekennzeichnet, dass** es ferner umfasst:
- ein System (20), das sich in dem optoelektronischen Dual-Breitband-Verstärker befindet, um die optischen Breitband-Mehrkanal-CATV-Signale in amplitudenmodulierte elektrische Signale umzusetzen;
- ein System (11, 12, 13, 17), das sich in dem optoelektronischen Dual-Breitband-Verstärker befindet, um die amplitudenmodulierten elektrischen Signale zu verstärken und sie auf mehrere Leitungen zu verzweigen;
- ein System (19, 30), das sich in dem optoelektronischen Dual-Breitband-Verstärker befindet, um die amplitudenmodulierten elektrischen Signale, die auf mehrere Leitungen verzweigt sind, in amplitudenmodulierte optische Signale umzusetzen und um die amplitudenmodulierten optischen Signale über mehrere Lichtleitfaser-Ausgangskabel (200) zu einer Teilnehmerbuchse zu senden, die sich im Haus jedes Teilnehmers befindet;
- ein System (21), das sich in dem optoelektronischen Dual-Breitband-Verstärker befindet, um die optischen Signale, die von den Teilnehmerbuchsen in den Wohnungen der Teilnehmer ankommen, und die über mehrere Lichtleitfaser-Eingangskabel gesendet werden, in elektrische Signale umzusetzen;
- ein System (22, 23, 24), das sich in dem optoelektronischen Dual-Breitband-Verstärker befindet, um die elektrischen Signale zu addieren und zu verstärken und um ein verstärktes elektrisches Summensignal zu erzeugen;
- ein System (20), das sich in dem optoelektronischen Dual-Breitband-Verstärker befindet, um das verstärkte elektrische Summensignal in ein optisches Summensignal umzusetzen und um das optische Summensignal zum Kopfende über Lichtleitfasern (101) zu senden;
- ein System (25), das sich in dem optoelektronischen Dual-Breitband-Verstärker befindet, um das verstärkte elektrische Summensignal in ein elektrisches Ausgangssignal umzusetzen, und einen Koaxialkabel-Verbinder besitzt;
- ein System (5000, 6000), das sich in dem optoelektronischen Dual-Breitband-Verstärker befindet, um das optische Signal, das in den mehreren Lichtleitfaser-Ausgangskabeln vorhanden ist, aus der Ferne ein- und auszuschalten;
- ein System, das sich in dem optoelektronischen Dual-Breitband-Verstärker befindet, um das optische Signal, das in den mehreren Lichtleitfaser-Eingangskabel vorhanden ist, aus der Ferne von dem optoelektronischen Dual-Breitband-Verstärker zu trennen und mit ihm zu verbinden.

2. CATV-Netz nach Anspruch 1, **gekennzeichnet durch** eine oder **durch** mehrere Einmoden-Fasern, die den optoelektronischen Dual-Breitband-Verstärker mit der Teilnehmerbuchse verbinden.

3. CATV-Netz nach Anspruch 1, **gekennzeichnet durch** eine oder mehrere Mehrmoden-Fasern, die den optoelektronischen Dual-Breitband-Verstärker mit der Teilnehmerbuchse verbinden.

4. CATV-Netz nach Anspruch 1 oder 2 oder 3, **gekennzeichnet durch** Laser des VCSEL-Typs, um die amplitudenmodulierten elektrischen Signale, die auf mehrere Leitungen verzweigt sind, in die amplitudenmodulierten optischen Signale umzusetzen, die längs der mehreren Lichtleitfaser-Ausgangskabel gesendet werden.

5. CATV-Netz nach den Ansprüchen 1 oder 2 oder 3, **gekennzeichnet durch** Laser des Fabry-Perot-Typs, um die amplitudenmodulierten elektrischen Signale, die auf mehrere Leitungen verzweigt sind, in die amplitudenmodulierten optischen Signale umzusetzen, die längs der mehreren Lichtleitfaser-Ausgangskabel gesendet werden.

6. CATV-Netz nach den Ansprüchen 1 oder 2 oder 3, **gekennzeichnet durch** Laser des DFB-Typs (Typ mit verteilter Rückkopplung), um die amplitudenmodulierten elektrischen Signale, die auf mehrere Leitungen verzweigt sind, in die amplitudenmodulierten optischen Signale umzusetzen, die über die mehreren Lichtleitfaser-Ausgangskabel gesendet werden.

7. CATV-Netz nach Anspruch 1, **gekennzeichnet durch** eine programmierbare Mikroprozessor-Steuerschaltung, um die amplitudenmodulierten optischen Signale, die über die mehreren Lichtleitfaser-Ausgangskabel gesendet werden, ein- und auszuschalten.

8. CATV-Netz nach Anspruch 1, **gekennzeichnet durch** eine programmierbare Mikroprozessor-Steuerschaltung, um das optische Signal, das in den mehreren Lichtleitfaser-Eingangsleitungen vorhanden ist, aus der Ferne zu trennen und zu verbinden.

9. CATV-Netz nach Anspruch 1, **dadurch gekennzeichnet, dass** das Summensignal durch Ausrichten mehrerer Fasern auf eine einzige Photodiode erzeugt wird.

## Revendications

1. Réseau de câblodistribution bilatéral pour distribuer des signaux optiques de câblodistribution de type multivoie et à large bande à partir d'un réémetteur optoélectronique bibande et de type à large bande au domicile d'un abonné via une fibre optique, et pour distribuer les signaux sur le trajet de retour depuis le domicile de l'abonné jusqu'à la tête de réseau via une fibre optique, comprenant un circuit imprimé électronique multicouche sur lequel sont montés les ensembles récepteur et émetteur, un système de connexion pour faciliter la configuration du système, **caractérisé en ce qu'**il comprend en outre :
- un système (20) disposé dans ledit réémetteur optoélectronique bibande et de type à large bande pour transformer lesdits signaux optiques de câblodistribution de type multivoie et à large bande en signaux électriques à modulation d'amplitude ;
- un système (11, 12, 13, 17) disposé dans ledit réémetteur optoélectronique bibande et de type à large bande pour amplifier lesdits signaux électriques à modulation d'amplitude et pour les brancher sur plusieurs lignes ;
- un système (19, 30) disposé dans ledit réémetteur optoélectronique bibande et de type à large bande pour transformer lesdits signaux électriques à modulation d'amplitude, branchés sur plusieurs lignes, en signaux optiques à modulation d'amplitude, et pour émettre des lesdits signaux optiques à modulation d'amplitude le long de plusieurs câbles de sortie à fibre optique (200) à une prise de courant d'abonné disposée au domicile de chacun desdits abonnés ;
- un système (21) disposé dans ledit réémetteur optoélectronique bibande et de type à large bande pour transformer en signaux électriques, les signaux optiques qui proviennent des prises de courant de l'abonné disposées aux domiciles desdits abonnés, et qui sont émis le long de plusieurs câbles d'entrée à fibre optique ;
- un système (22, 23, 24) disposé dans ledit réémetteur optoélectronique bibande et de type à large bande pour additionner et amplifier lesdits signaux électriques et pour obtenir un signal somme électrique amplifié ;
- un système (20) disposé dans ledit réémetteur optoélectronique bibande et de type à large bande pour transformer ledit signal somme électrique amplifié en un signal somme optique et pour émettre ledit signal somme optique à la tête de réseau le long de fibres optiques (101) ;
- un système (25) disposé dans ledit réémetteur optoélectronique bibande et de type à large bande pour transformer ledit signal somme électrique amplifié en une sortie électrique, comprenant un connecteur de câble coaxial ;
- un système (5000, 6000) disposé dans ledit réémetteur optoélectronique bibande et de type à large bande pour la mise en circuit et hors circuit à distance des signaux optiques présents dans ladite multitude de câbles de sortie à fibres optiques ;
- un système disposé dans ledit réémetteur optoélectronique bibande et de type à large bande pour la déconnexion et la connexion à distance desdits signaux optiques présents dans ladite multitude de câbles d'entrée à fibres optiques par rapport audit réémetteur optoélectronique bibande et de type à large bande.

2. Réseau de câblodistribution selon la revendication 1, **caractérisé par** une ou plusieurs fibres optiques monomodales qui connectent ledit réémetteur optoélectronique bibande et de type à large bande à ladite prise de courant d'abonné.

3. Réseau de câblodistribution selon la revendication 1, **caractérisé par** une ou plusieurs fibres optiques multimodales qui connectent ledit réémetteur optoélectronique bibande et de type à large bande à ladite prise de courant d'abonné.

4. Réseau de câblodistribution selon la revendication 1 ou 2 ou 3, **caractérisé par** des lasers de type VCSEL pour transformer lesdits signaux électriques à modulation d'amplitude branchés sur plusieurs lignes afin d'obtenir lesdits signaux optiques à modulation d'amplitude qui sont émis le long de ladite multitude de câbles de sortie à fibres optiques.

5. Réseau de câblodistribution selon la revendication 1 ou 2 ou 3, **caractérisé par** des lasers de type Fabry-Pérot pour transformer lesdits signaux électriques à modulation d'amplitude branchés sur une multitude de lignes afin d'obtenir lesdits signaux optiques à modulation d'amplitude qui sont émis le long de ladite multitude de câbles de sortie à fibres optiques.

6. Réseau de câblodistribution selon la revendication 1 ou 2 ou 3, **caractérisé par** des lasers de type DFB (à rétroaction distribuée) pour transformer lesdits signaux électriques à modulation d'amplitude branchés sur une multitude de lignes afin d'obtenir lesdits signaux optiques à modulation d'amplitude qui sont émis le long de ladite multitude de câbles de sortie à fibres optiques.

7. Réseau de câblodistribution selon la revendication 1, **caractérisé par** un circuit de commande à microprocesseur programmable pour la mise en circuit et hors circuit desdits signaux optiques à modulation d'amplitudes qui sont émis le long de ladite multitude de câbles de sortie à fibres optiques.

8. Réseau de câblodistribution selon la revendication 1, **caractérisé par** un circuit de commande à microprocesseur programmable pour la déconnexion et connexion à distance des signaux optiques présents dans ladite multitude de lignes d'entrée à fibres optiques.

9. Réseau de câblodistribution selon la revendication 1, **caractérisé en ce que** ledit signal somme est obtenu par la mise en alignement de plusieurs fibres sur une seule photodiode.
